# FASCICULE DE BREVET EUROPEEN

(11) **EP 1 503 963 B1**
(45) Date de publication et mention de la délivrance du brevet: **09.07.2008**
(21) Numéro de dépôt: 03740575.0
(22) Date de dépôt: 07.04.2003
(51) Int. Cl.: C03B 5/02

(54) **FOUR ET PROCEDE DE VITRIFICATION A DOUBLE MOYEN DE CHAUFFAGE**
VERGLASUNGSOFEN UND VERFAHREN MIT ZWEI HEIZEINRICHTUNGEN
VITRIFICATION FURNACE AND METHOD WITH DUAL HEATING MEANS

(30) Priorité: 08.04.2002 FR 0204328
(43) Date de publication de la demande: 09.02.2005
(73) Titulaire: COMMISSARIAT A L'ENERGIE ATOMIQUE, 75015 Paris (FR); Areva NC, 75009 Paris (FR)
(72) Inventeur: Girold, Christophe, F-84420 Piolenc (FR); Bruguiere, Lionel, F-34130 Saint-Aunes (FR); Boen, Roger, F-30130 Saint-Alexandre (FR); Bonnetier, Armand, F-84100 Orange (FR); Bojat, Louis, F-30330 Cavillargues (FR)
(74) Mandataire: Poulin, Gérard
(86) Numéro de dépôt international: PCT/FR2003/001087
(87) Numéro de publication internationale: WO 2003/084883

(56) Documents cités:
- WO-A-98/05185
- US-A- 5 750 822

## Description

L'invention exposée ici ressortit à un four et à un procédé de vitrification à double moyen de chauffage, et elle concerne le traitement par combustion et vitrification d'une grande variété de déchets dans un appareil en métal refroidi. Les fonctions du procédé sont d'assurer l'incinération complète des matières combustibles et de confiner la fraction minérale du produit traité dans une matrice élaborée par fusion à haute température. Le déchet obtenu est un verre (ou un corps vitro-cristallin) renfermant dans sa structure atomique les éléments toxiques à confiner.

Depuis plusieurs années, de nombreux travaux de recherche concernent l'immobilisation de la fraction toxique de déchets combustibles variés dans une matrice de type vitreuse, vitro-cristalline ou cristalline, la toxicité pouvant être chimique (ainsi, des métaux lourds) ou radioactive. L'intérêt est souvent multiple : stabiliser les déchets, aboutir à une matrice de confinement éprouvée et durable, réduire le volume initial des déchets, etc.

La recherche d'un procédé industriel permettant de réaliser à la fois la combustion et la vitrification dans un appareil unique, simple et générant peu de déchets secondaires présente un intérêt économique évident.

Plusieurs voies on été explorées, dans des laboratoires de recherche ou à des échelles industrielles. On peut citer essentiellement l'utilisation des plasmas thermiques, des variantes utilisant des électrodes immergées ou non et la fusion par induction directe.

En ce qui concerne les traitements au plasma, plusieurs procédés ont été développés, mais ils présentent des inconvénients qui ont rendu difficile leur application industrielle. En effet, construits en matériaux réfractaires, les creusets s'usent rapidement, à la fois au contact du verre fondu (par corrosion dans un milieu agressif complexe) et sous le rayonnement intense de plasma. La capacité de traitement de déchets combustibles dans ces fours à plasma est également limitée afin de ménager les garnissages en matières réfractaires.

Les gaz plasmagènes habituellement utilisés sont de l'azote ou de l'air. Dans le premier cas, le plasma généré n'est utilisé que comme source de chaleur et non pas comme élément de combustion, ce qui conduit au simple craquage des molécules organiques. Ceci rend complexe la composition chimique et le traitement des fumées qui contiennent beaucoup d'imbrûlés, de suies et poussières et souvent d'oxydes d'azote. Le cas de l'utilisation d'air comme gaz plasmagène résout partiellement les inconvénients précédant mais 80% des gaz sont alors inutiles et cependant portés à haute température, ce qui nécessite un sur-dimensionnement des unités de traitement des gaz.

Des réalisations de fusion par plasma en creusets refroidis ont également été testées afin de s'affranchir du problème des réfractaires. Le cuivre est proposé comme matière de construction de creusets mais il possède le même inconvénient d'être sensible à la corrosion, particulièrement en milieu nitrique ; l'acier inoxydable noble lui est préférable. Cependant, les transferts thermiques du matériau fondu dans le creuset vers les parois sont tels que la fusion est toujours rendue difficile, ce qui est préjudiciable à l'établissement d'un bain suffisamment étendu et à la vidange du creuset.

La technique de fusion par induction directe à haute fréquence dans un creuset métallique dont au moins une partie est transparente aux champs électromagnétiques est aussi connue. La fusion, l'établissement d'un bain de verre suffisant et la coulée sont, avec cette technique, maîtrisés. Des utilisations sont connues dans le domaine de l'élaboration de verres ou d'émaux de grande pureté ou dans le domaine de la vitrification de déchets radioactifs de haute activité. On trouve des descriptions pertinentes dans les demandes de brevets français FR 91 02596 ou FR 96 09382. Mais en appliquant ce procédé à la fusion d'une matrice de confinement au-dessus de laquelle sont jetés des éléments combustibles, des inconvénients sont mis en évidence. Notamment, l'interaction chimique du déchet à traiter avec le matériau fondu est forte et conduit à des modifications importantes de sa composition et de son homogénéité. La réduction jusqu'à la phase métallique d'un matériau à base d'oxyde (verre) est par exemple quasi inévitable lorsque le déchet contient du carbone ou de l'hydrogène ou du soufre, même en mettant en oeuvre des moyens de soufflage d'air ou d'oxygène dans ou sur le bain. Ce résultat altère les propriétés recherchées pour la matrice de confinement des cendres ainsi que le bon fonctionnement électromagnétique du procédé. En ce qui concerne la combustion en surface, selon le pouvoir calorifique des déchets traités, la température (donc la fusion) de la couche superficielle du matériau fondu n'est pas toujours assurée, et il peut apparaître un refroidissement associé à une accumulation de matière restée solide. A noter que le démarrage des procédés de fusion par induction directe en creuset froid nécessite toujours la mise en oeuvre d'un procédé spécifique (suscepteur, métallo-thermie, etc.) lorsque le matériau fondu n'est pas conducteur électrique à basse température, ce qui est le cas du verre.

Le but de l'invention est de remédier à l'ensemble de ces inconvénients en présentant un procédé hybride permettant de découpler les fonctions combustion et vitrification dans un même appareil. La fonction de combustion avec maîtrise de l'atmosphère oxydante est assurée par un plasma d'oxygène à la surface du matériau fondu alors que la fonction de fusion est remplie majoritairement par un chauffage inductif direct dans le matériau fondu. Les deux fonctions deviennent complémentaires dans le procédé. Le plasma permet le démarrage de la fusion, la combustion complète en surface, la maîtrise de l'atmosphère oxydante, l'augmentation de capacité, la non-accumulation des déchets en surface, alors que l'induction directe permet d'obtenir simultanément une fusion homogène du matériau dans la structure refroidie et permet la coulée. Dans des phases particulières de fonctionnement, si la température en surface doit être modérée (recyclage d'éléments volatils) ou que le produit alimenté ne nécessite pas de combustion, le chauffage par induction seul peut être utilisé.

L'invention est une installation et un procédé de combustion-vitrification de déchets incinérables ou minéraux, installation ci-après dénommée four. Le four est caractérisé en ce que deux modes de chauffage sont utilisés, de manière associée ou dissociée. Le premier mode de chauffage est un plasma thermique d'oxygène. Le moyen de génération du plasma se trouve au-dessus de la surface d'un matériau fondu se trouvant dans un creuset refroidi par des fluides circulant. Le plasma thermique peut être généré par une torche à haute fréquence, une torche à arc soufflé ou une torche à arc transféré. Dans le mode préféré de réalisation décrit ci-après, le plasma est un plasma d'arc généré entre deux torches aériennes mobiles couvrant tout ou partie de la surface du matériau fondu.

Le second mode de chauffage utilise un inducteur permettant le chauffage par induction directe du matériau contenu dans le creuset. Le creuset est constitué d'une virole externe et d'une sole, toutes deux refroidies par des fluides circulant. Au moins l'une des deux parties du creuset doit être transparente au rayonnement électromagnétique (c'est-à-dire sectorisée si elle est réalisée dans un matériau conducteur électrique) afin de permettre la création de courants induits dans le matériau fondu contenu. L'inducteur peut être un bobinage hélicoïdal se plaçant à l'extérieur d'une virole ou un bobinage plat sous une sole.

L'inducteur se trouve sous la sole et le creuset comprend une virole non sectorisée. Ceci est justifié par le fait que durant la combustion en surface, il peut y avoir formation de poussières conductrices qui créent des courts-circuits entre les secteurs isolés (phénomène allant jusqu'à la détérioration des secteurs) ou de nappe de sels non dissous, perturbant la forme du champ électromagnétique. De plus, l'induction par les parois latérales favorise le chauffage du bain de verre en surface, alors que l'induction sous la sole favorise le chauffage du fond du creuset. Ce dernier mode est idéal dans le cas de l'invention puisque le plasma chauffe la surface du verre. La sole peut être en métal sectorisé mais dans le mode préféré, elle est non sectorisée car réalisée en matériau isolant électrique et bon conducteur thermique. L'usure de tels matériaux réfractaires est moins à redouter ici car sous le bain, la surface de la sole ne subit pas les agressions du plasma et des gaz et poussières corrosifs. La continuité de structure, contraire à la sectorisation, est évidemment avantageuse car elle donne une plus un matériau fondu homogène de nature vitreuse grande facilité de fabrication et une meilleure résistance à l'usure en raison, entre autres, de l'absence de garnitures d'étanchéité entre les secteurs.

L'atmosphère oxydante dans le four permet avant tout d'éviter la formation d'une phase métallique dans le bain fondu et d'obtenir un matériau fondu homogène de nature vitreuse où la combustion des matières organiques est complète et le traitement ultérieur est plus simple.

L'art antérieur comprend un document US 5 750 822 qui décrit aussi un double chauffage, par une bobine inductrice entourant la paroi latérale et par une torche à plasma. Contrairement à l'invention, les deux moyens de chauffage servent à favoriser l'apparition et la séparation de deux phases de natures différentes (métallique et vitreuse) dans le bain fondu, qui sont chauffées et fondues par les deux moyens respectivement, le plasma étant affecté à la phase vitreuse et l'induction à la phase métallique. Il est aussi mentionné dans ce brevet qu'un corps oxydant tel que l'oxygène peut être injecté dans la matière fondue pour favoriser l'oxydation des corps toxiques et organiques afin d'incorporer les premiers dans la phase vitreuse et de transformer les seconds en gaz inoffensifs.

Le brevet français 96 09382 déjà cité mentionne un inducteur placé sous la sole d'un four de vitrification, mais comme moyen unique de chauffage.

La combinaison des deux moyens de chauffage conforme à l'invention et de l'emploi de plasma d'oxygène (alors que l'introduction d'oxygène sous d'autres formes s'est révélée insuffisante) permet donc d'obtenir une seule phase, non métallique, du bain fondu, et un chauffage assez uniforme bien approprié à la phase unique.

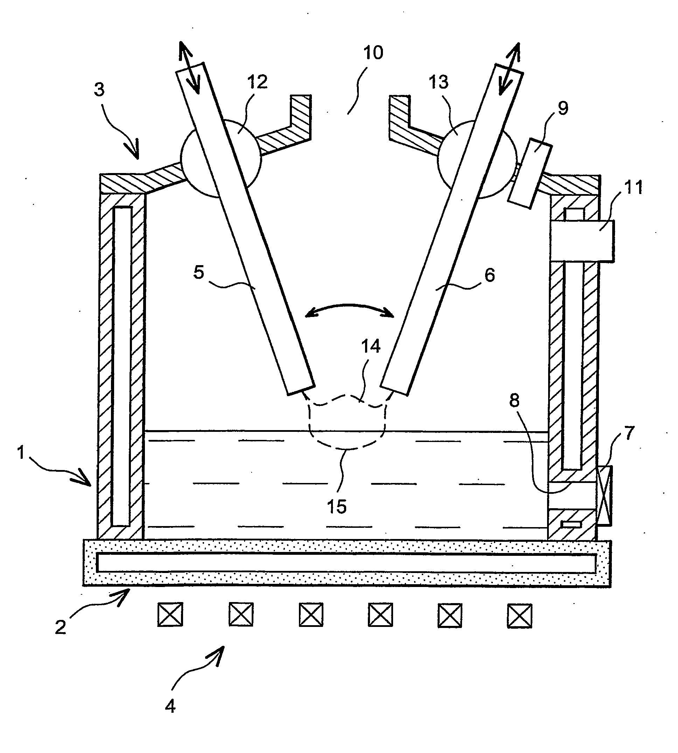

L'invention sera maintenant décrite à l'aide de la figure 1, qui est annexée à titre illustratif et non limitatif et représente le mode préféré de réalisation de l'invention.

Le four selon l'invention compte six parties principales qui sont une virole 1, une sole 2, une voûte 3, un inducteur 4, une torche à plasma cathode 5, une torche à plasma anode 6, une vanne de vidange 7.

Le creuset froid est constitué de la virole 1, de la sole 2 et de la voûte 3. La virole 1 est une virole verticale en métal refroidi, et placée sur la sole 2 horizontale refroidie. La virole 1 comporte en partie basse un orifice de vidange 8 obturé par la vanne de vidange 7, qui est coulissante et refroidie. Dans une variante, l'orifice de vidange 8 peut être placé sur la sole 2. Ni la virole 1 ni la sole 2 ne sont sectorisées, ce qui signifie qu'elles sont continues sur leur circonférence, et la sole 2 est en matière isolante électrique, la virole 1 étant métallique. Une sole 2 métallique et sectorisée, donc transparente aux champs magnétiques, pourrait aussi être employée.

Le creuset est formé en partie supérieure par la voûte 3 recevant la torche à plasma cathode 5 jumelée avec la torche à plasma anode 6, un orifice d'introduction du matériau à fondre 9 et un orifice du déchet à traiter 10. Les gaz de combustion sont acheminés vers la suite de leur traitement via un orifice 11 placé en partie haute du creuset 1 refroidi. Dans une variante, l'orifice 11 peut être placé sur la voûte 3.

Les faces internes métalliques du creuset peuvent être revêtues par une faible couche de type céramique.

Dans cette réalisation, l'inducteur 4 est placé sous la sole et comprend au moins un bobinage plat.

Dans le mode de réalisation décrit, le creuset et notamment la virole 1 et la sole 2 sont de forme circulaire avec un inducteur 4 central, mais ils peuvent prendre d'autres formes, en particulier elliptiques. Dans ce cas particulier de réalisation, l'inducteur 4 peut ne pas être surplombé par les torches à plasma 5 et 6 mais au contraire être décalé latéralement d'elles de façon à favoriser deux zones dans le four, une plus chaude en atmosphère oxydante avec les torches à plasma et l'autre de température plus modérée, plus propice à un recyclage en continu d'éléments volatils par exemple.

Dans le mode préféré de réalisation ici décrit, le plasma est généré au moyen d'un système à deux torches à plasma jumelées ; il pourrait être généré par un système à torche unique du type à arc transféré simple ou à arc soufflé.

Les torches à plasma 5 et 6 sont destinées à fonctionner de façon jumelée, l'une en tant qu'anode et l'autre en tant que cathode après avoir reçu une polarisation électrique appropriée. Elles sont toutes deux constituées d'une électrode métallique refroidie entourée par un premier manchon intérieur alimenté en gaz plasmagène source protégeant l'électrode de son oxydation et d'un second manchon externe alimenté en gaz plasmagène de gainage. Le gaz de gainage est de l'oxygène dans notre cas. Les torches sont montées sur des rotules 12 et 13 installées à travers la paroi de la voûte 3, ce qui les rend mobiles dans le creuset et permet de régler leur distance. Un dispositif mécanique quelconque, par exemple à vis de réglage, permet également de modifier la plongée des torches à plasma 5 et 6 dans le creuset en les faisant coulisser verticalement (ou sensiblement) et ainsi de les rapprocher ou de les éloigner de la surface du matériau fondu. Ces mouvements possibles des torches 5 et 6 permettent évidemment, de façon avantageuse, de régler la forme et la place de l'arc intermédiaire.

L'arc électrique est amorcé par une décharge à haute tension et haute fréquence entre les deux torches 5 et 6. Il peut ensuite être entretenu soit en circulant au travers du matériau fondu selon le chemin 15 ou uniquement en aérien selon le chemin 14. Ce sont les positions géométriques des torches 5 et 6 entre elles ainsi que les paramètres électriques de l'arc et de débit de gaz plasmagène qui permettent d'imposer l'un ou l'autre de ces modes de fonctionnement. Dans le cas où le courant d'arc circule au travers du matériau fondu, il contribue fortement à sa fusion ; en aérien par contre, le plasma n'est utilisé que pour sa fonction chimique.

Lors du démarrage de l'appareil, les torches 5 et 6 sont approchées suffisamment près du matériau contenu dans le creuset pour commencer sa fusion. Dès qu'une faible quantité de matériau est fondue et devenue conductrice, les paramètres sont adaptés pour forcer le courant d'arc à passer au travers du bain fondu de façon à l'étendre plus rapidement. Quand la taille du bain formé le permet, le courant à haute fréquence est appliqué à l'inducteur 4 et la fusion du matériau par induction directe peut prendre le relais.

Les deux modes de chauffage peuvent ensuite être utilisés, selon l'application, en commun ou séparément. En phase d'affinage d'une matrice vitreuse, par exemple avant la coulée, le plasma peut ne pas être nécessaire, tout comme s'il existe une période durant laquelle l'atmosphère au-dessus du bain doit être moins oxydante. En utilisant en permanence les deux modes de chauffage, on cherchera à éviter la formation d'une phase métallique imposant un potentiel redox pouvant favoriser la volatilité de certains éléments à confiner.

Dans ce paragraphe, les avantages procurés par l'invention dans son mode préféré de réalisation sont repris.
- Démarrage au plasma d'arc quel que soit l'état du matériau à fondre (conducteur électrique ou non),
- absence de contre-électrode collectrice de courant noyée dans le matériau fondu (absence de pollution et de matière consommable noyée),
- souplesse de fonctionnement donnée par les différentes possibilités de mode d'arc (complètement aérien ou circulant en partie dans le matériau),
- configuration du plasma d'arc (jet cathodique et jet anodique) mieux appropriée à la combustion par rapport à une colonne simple de plasma : volume de plasma plus grand, rayonnement plus important,
- l'application de la combustion - vitrification de matière organique à la surface d'un bain de verre, contenu dans une structure froide, uniquement chauffé par plasma est limitée à un petit diamètre de creuset du fait des pertes thermiques vers les parois. L'invention proposée, en couplant un moyen de chauffage autre, permet de constituer un bain de matériau fondu de très grande taille, toujours en structure complètement froide, tout en conservant les avantages du plasma d'oxygène (bonne combustion) et en limitant les effets négatifs de volatilisation (le plasma n'est plus utilisé pour fondre après le démarrage, mais seulement pour brûler),
- pour les mêmes raisons que précédemment, on résout les problèmes de fusion inhomogène du matériau et de vidange du creuset à parois froides,
- l'application d'un plasma d'oxygène en surface d'un matériau fondu limite, voire supprime, les interactions entre ce matériau et les éléments du déchet traité (oxydo-réduction, inclusion, etc.),
- le pilotage séparé des deux fonctions du procédé apporte une souplesse de fonctionnement sans antécédent, permettant d'envisager des cycles mixtes de combustion-vitrification, ou de vitrification seule, en adaptant les paramètres de chacun des moyens de chauffage (application à des déchets de natures différentes, au recyclage des corps volatils, etc.),
- le couplage "combustion par plasma-chauffage par induction" permet en outre d'apporter une solution au démarrage de la fusion de verre dans un creuset froid sans utiliser de moyens annexes (métallo-thermie, susception, etc.).

A titre d'exemple, et seulement à ce titre, nous décrivons brièvement une application expérimentale de l'invention : la combustion-vitrification de Résines échangeuses d'ions (REI) contaminées en radioéléments sur un verre de la famille des néphélines (SiO2, Na2O, A1203). Les REI traitées sont un mélange à parts égales d'amberlite acide IRN77 et basique IRN78 (ayant pour composition massique : C= 69%, G= 7%, O= 14%, N= 3%) contenant 50% d'eau en masse. L'installation expérimentale fonctionne par lots ; elle est dotée d'un creuset de diamètre 60 cm rempli de 50 kg de fritte de verre et fonctionne en régime nominal avec environ 25 kW de puissance de plasma et 50kW de puissance électrique inductive. Le débit de déchets traités dans les conditions citées ci-dessus est en moyenne de 10 kg/h environ sur une durée d'alimentation, il n'y a pas d'accumulation des déchets en surface mais une incorporation immédiate. Ces valeurs de temps de fonctionnement et de capacité ne représentent pas les limites maximales de l'installation expérimentale. La combustion parfaite des résines est obtenue avec un excès en oxygène limité à 20%.

On constate une absence de fumées opaques dans le four, une quantité très faible de monoxyde de carbone produite, une absence de suies. Le verre obtenu ne présente pas un caractère réduit et a intégré la quasi-totalisé des éléments minéraux contenus dans les déchets.

Un tel procédé, compact, permettant de simplifier les étapes du traitement d'un déchet, de diminuer le nombre et la taille des équipements peut majoritairement trouver des applications dans le domaine du traitement des déchets radioactifs combustibles. La souplesse offerte par la complémentarité des modes de chauffage mis en oeuvre ainsi et le peu de déchets secondaires générés confèrent à l'invention des avantages certains pour le traitement de déchets variés du type B (cellulose, plastique, REI, boues, bitumes, graphite, etc.).

Par extension, des applications pour déchets industriels spéciaux peuvent être envisagées.

## Revendications

1. Four de vitrification comprenant un creuset (1, 2, 3) et des moyens de chauffage, comprenant au moins une torche à plasma (5) à une partie supérieure du creuset et au moins un bobinage inducteur (4) hors du creuset, **caractérisé en ce que** le bobinage inducteur est disposé sous le creuset et **en ce que** le plasma est un plasma d'oxygène créant une atmosphère oxydante dans le four.

2. Four de vitrification selon la revendication 1, **caractérisé en ce que** le creuset comprend une sole (2) de fond en matière réfractaire et une virole (1) dressée sur la sole (2), la virole (1) ayant une structure continue sur la circonférence et étant en matière métallique.

3. Four de vitrification selon la revendication 1, **caractérisé en ce que** les moyens de chauffage comprennent une seconde torche à plasma, les torches à plasma étant en polarisation électrique pour créer un arc entre elles, le creuset comprenant une virole (1) latérale refroidie.

4. Four de vitrification selon la revendication 3, **caractérisé en ce que** les torches sont mobiles dans le creuset.

5. Four de vitrification selon la revendication 4, **caractérisé en ce que** les torches sont mobiles en coulissant verticalement.

6. Four de vitrification selon l'une quelconque des revendications 1 à 5, **caractérisé en ce que** la torche est décalée latéralement du bobinage inducteur.

7. Procédé de vitrification mené avec un four selon l'une quelconque des revendications précédentes, **caractérisé en ce qu'**il comprend une étape de combustion d'une charge du four en utilisant la torche à plasma (5) d'oxygène, créant l'atmosphère oxydante dans le four, de façon à éviter qu'une phase métallique ne se forme dans la charge du four.

8. Procédé de vitrification selon la revendication 7, **caractérisé en ce qu'**il comprend une étape d'amorçage avec un chauffage exclusif par la torche, et une étape de régime permanent avec un chauffage simultané par la torche et le bobinage inducteur.

9. Procédé de vitrification selon la revendication 7, avec un four selon la revendication 5, **caractérisé en ce que** les torches sont approchées du contenu du four pour l'étape de régime permanent.

## Claims

1. Vitrification furnace comprising a crucible (1, 2, 3) and heating means comprising at least one plasma torch (5) on an upper part of the crucible and at least one inductor winding (4), outside the crucible, **characterized in that** the inductor winding is arranged under the crucible and **in that** the plasma is an oxygen plasma creating an oxidizing atmosphere in the furnace.

2. Vitrification furnace according to claim 1, **characterized in that** the crucible comprises a sole plate (2) made of refractory material and a shell (1) placed upright on the sole plate (2), the shell (1) having a continuous structure around the circumference and being made of metallic material.

3. Vitrification furnace according to claim 1 or 2, **characterized in that** the heating means comprise a second plasma torch, the plasma torches being electrically polarized to create an arc between them, the crucible comprising a cooled lateral shell (1).

4. Vitrification furnace according to claim 3, **characterized in that** the torches are mobile in the crucible.

5. Vitrification furnace according to claim 4, **characterized in that** the torches are free to slide vertically.

6. Vitrification furnace according to any of claims 1 to 5, **characterized in that** the torch is laterally offset from the inductor winding.

7. Vitrification process performed with a furnace according to any one of the preceding claims, **characterized in that** it comprises a combustion stage of a furnace charge using the oxygen plasma torch (5), creating the oxidizing atmosphere in the furnace, so as to prevent the formation of a metallic phase in the furnace charge.

8. Vitrification process according to claim 7, **characterized in that** it includes a starting step with exclusive heating by the torch, and continuous operation with simultaneous heating by the torch and the inductor winding.

9. Vitrification process according to claim 7, with a furnace according to claim 5, **characterized in that** the torches are brought close to the furnace contents for the continuous operation step.

## Patentansprüche

1. Verglasungsofen mit einem Tiegel (1, 2, 3) und Heizeinrichtungen, mindestens einen Plasmabrenner (5) in einem oberen Teil des Tiegels und mindestens eine Induktionswicklung (4) außerhalb des Tiegels umfassend,
**dadurch gekennzeichnet, dass** die Induktionswicklung sich unter dem Tiegel befindet, und **dadurch**, dass das Plasma ein Sauerstoffplasma ist, das in dem Ofen eine Oxidationsatmosphäre erzeugt.

2. Verglasungsofen nach Anspruch 1, **dadurch gekennzeichnet, dass** der Tiegel eine Sohle (2) aus refraktärem Material und einen auf die Sohle (2) montierten Mantel (1) umfasst, wobei der Mantel (1) eine über den Umfang kontinuierliche Struktur aufweist und aus einem metallischen Stoff ist.

3. Verglasungsofen nach Anspruch 1, **dadurch gekennzeichnet, dass** die Heizeinrichtungen einen zweiten Plasmabrenner umfassen, wobei die elektrische Polarisation der Plasmabrenner zwischen ihnen einen Lichtbogen erzeugt und der Tiegel einen gekühlten Mantel (1) umfasst.

4. Verglasungsofen nach Anspruch 3, **dadurch gekennzeichnet, dass** die Brenner in dem Tiegel beweglich sind.

5. Verglasungsofen nach Anspruch 4, **dadurch gekennzeichnet, dass** die Brenner beweglich sind, indem sie vertikal verschiebbar sind.

6. Verglasungsofen nach einem der Ansprüche 1 bis 5, dass der Brenner seitlich der Induktionswicklung verschoben wird.

7. Verglasungsverfahren, durchgeführt mit einem Ofen nach einem der vorangehenden Ansprüche, **dadurch gekennzeichnet, dass** es einen Schritt zur Verbrennung einer Charge des Ofens umfasst, wobei man den die Oxidationsphase in dem Ofen erzeugende Sauerstoffplasmabrenner (5) so benutzt, dass die Bildung einer metallischen Phase in der Charge des Ofens vermieden wird.

8. Verglasungsverfahren nach Anspruch 7, **dadurch gekennzeichnet, dass** es einen Einleitungsschritt mit einer exklusiven Brennerheizung und einen Dauerbetriebsschritt mit einer simultanen Heizung durch den Brenner und die Induktionswicklung umfasst.

9. Verglasungsverfahren nach Anspruch 7 mit einem Ofen nach Anspruch 5, **dadurch gekennzeichnet, dass** die Brenner für den Dauerbetriebsschritt dem Inhalt des Ofens genähert werden.
